Europäisches Patentamt

**European Patent Office**

Office européen des brevets

(11) Veröffentlichungsnummer: **0 204 956**
**B1**

(12) EUROPÄISCHE PATENTSCHRIFT

(45) Veröffentlichungstag der Patentschrift:
12.09.90

(51) Int. Cl.⁵: **G11B 5/53**

(21) Anmeldenummer: 86106154.7

(22) Anmeldetag: 06.05.86

(54) Gerät, insbesondere Videorecorder.

(30) Priorität: 14.05.85 DE 3517266

(43) Veröffentlichungstag der Anmeldung:
17.12.86 Patentblatt 86/51

(45) Bekanntmachung des Hinweises auf die Patenterteilung:
12.09.90 Patentblatt 90/37

(84) Benannte Vertragsstaaten:
AT BE CH DE FR GB IT LI LU NL SE

(56) Entgegenhaltungen:
EP-A- 203 420
DE-A- 2 552 784
DE-A- 3 115 670
GB-A- 2 043 306
GB-A- 2 153 583

(73) Patentinhaber: Deutsche Thomson-Brandt GmbH,
Hermann-Schwer-Strasse 3 Postfach 1307,
D-7730 Villingen-Schwenningen(DE)

(72) Erfinder: Keesen, Werner, Dr. Ing., Tiestestrasse 5,
D-3000 Hannover 1(DE)
Erfinder: Oberjatzas, Günter, Dipl.-Ing.,
Langenkampstrasse 42, D-3013 Barsinghausen(DE)
Erfinder: Hartnack, Wolfgang, Dipl.-Ing., Saarstrasse 22,
D-3005 Hemmingen 1(DE)
Erfinder: Habben, Dieter, Dipl.-Ing., Röntgenstrasse 13,
D-3000 Hannover 1(DE)
Erfinder: Schäfer. Ralf-Detlef, Dipl.-Ing., Im Bultfeld 44,
D-3305 Hemmingen 4(DE)
Erfinder: Peters, Hartmut, Dipl.-Ing.,
Wilh-.Bluhmstrasse 37, D-3000 Hannover 91(DE)

(74) Vertreter: Einsel, Robert, Dipl.-Ing., Deutsche
Thomson-Brandt GmbH Patent- und Lizenzabteilung
Göttinger Chaussee 76, D-3000 Hannover 91(DE)

ACTORUM AG

## Beschreibung

Die Erfindung betrifft ein Gerät, insbesondere einen Videorekorder, gemäß dem Oberbegriff des Patentanspruchs 1.

Aus der DE-OS 31 15 670 ist ein Verfahren bekannt, die Winkellage der Magnetköpfe zum Band zu bestimmen. Eine Kopfradscheibe enthält neben den beiden rotierenden Magnetköpfen zwei rotierende Permanentmagnete, die während der Rotation in einem stationären Kopf oder in einer stationären Spule außerhalb des Kopfes, fest eingebaut in einer Kopfradumgebung, Impulse wechselnder Polarität erzeugen. Die Impulse dienen als Kriterium für die jeweilige Stellung und Geschwindigkeit der Kopfradscheibe (Seite 6, 1. Absatz).

Der Erfindung liegt die Aufgabe zugrunde, eine Anordnung zu schaffen, die eine Winkelposition der Kopfradscheibe bestimmt und bei einer Bewegung der Kopfradscheibe in Achsrichtung über eine Höhe h wirksam ist.

Die Aufgabe wird durch die im Patentanspruch 1 angegebenen Merkmale gelöst. Vorteilhafte Weiterbildungen der Erfindung sind in Unteransprüchen angegeben.

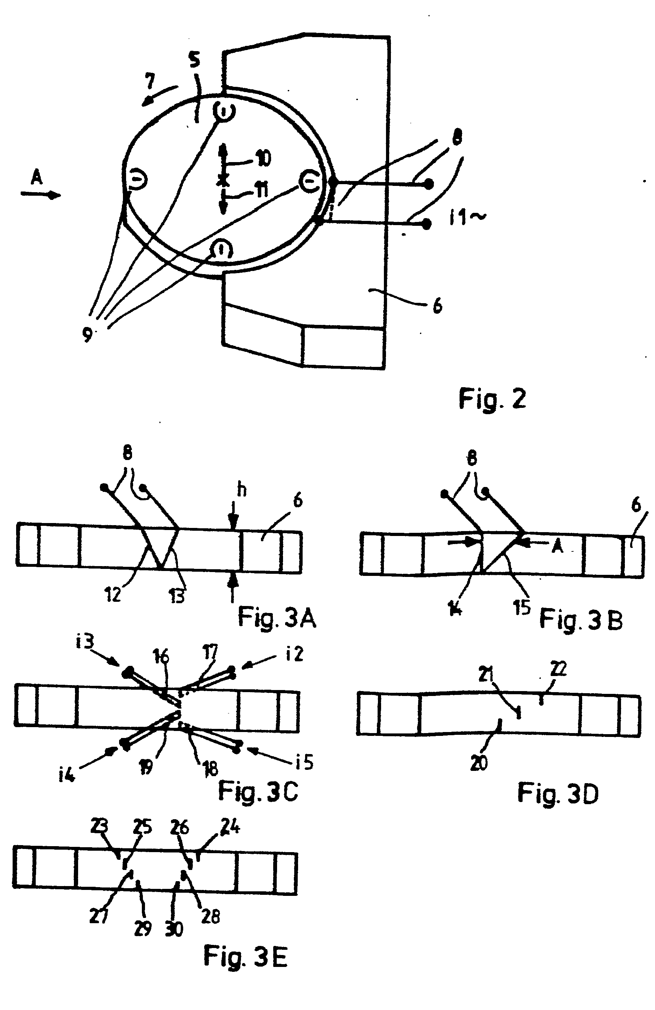

In der prioritätsgleichen parallelen europäischen Patentanmeldung Nr. 86 106 153.9 (Veröffentlichung EP-A-203 420) der Anmelderin wird für ein Gerät der beschriebenen Art beansprucht, daß der oder die Geber ortsfest am Chassis angeordnet sind und auf einen oder mehrere Köpfe als Empfänger einwirken, aus dessen oder deren Ausgangssignal ein die Winkellage der Kopfradscheibe anzeigende Impuls (Fig. 3) abgeleitet ist.

Die Erfindung geht von folgenden Überlegungen aus. Aufzeichnungssysteme können Daten auf einem bandförmigen Aufzeichnungsträger blockweise anordnen. Dabei werden Informationen und/oder Daten auf gegenüber der Länge des Trägers kurzen Spurabschnitten in etwa parallel zur Bandkante aufgezeichnet. Spuren werden sowohl nebeneinander als auch hintereinander aufgezeichnet. Zur Spurfindung in vertikaler Richtung, das heißt, zur Suche und Unterscheidung von Spuren, die etwa parallel zur Bandkante liegen, müssen ein oder mehrere Magnetköpfe, die auf einer rotierenden Kopfradscheibe angeordnet sind, über eine Höhe h kontrolliert werden. Dabei muß sichergestellt werden, daß der bandförmige Aufzeichnungsträger durch Spurführungseinrichtungen in der Spur gehalten wird und ohne Vertikalverschiebung so an der Kopfradscheibe vorbeiläuft, daß sich eine eindeutige Zuordnung zwischen Magnetköpfen und Längsspuren auf dem bandförmigen Aufzeichnungsträger treffen läßt.

Zum besseren Verständnis der Erfindung werden nachstehend einige Ausführungsbeispiele anhand von Zeichnungen näher erläutert.

Es zeigen

Fig. 1 einen Spurenverlauf auf einem Magnetband,

Fig. 2 eine Kopfradscheibe und ihre stationäre Umgebung,

Fig. 3 die stationäre Umgebung mit Anzeigern,

Fig. 4 einen Löschkopf mit Doppelspalt,

Fig. 5 eine Hüllkurve,

Fig. 6 eine Schaltung und

Fig. 7 eine Anordnung von Löschköpfen.

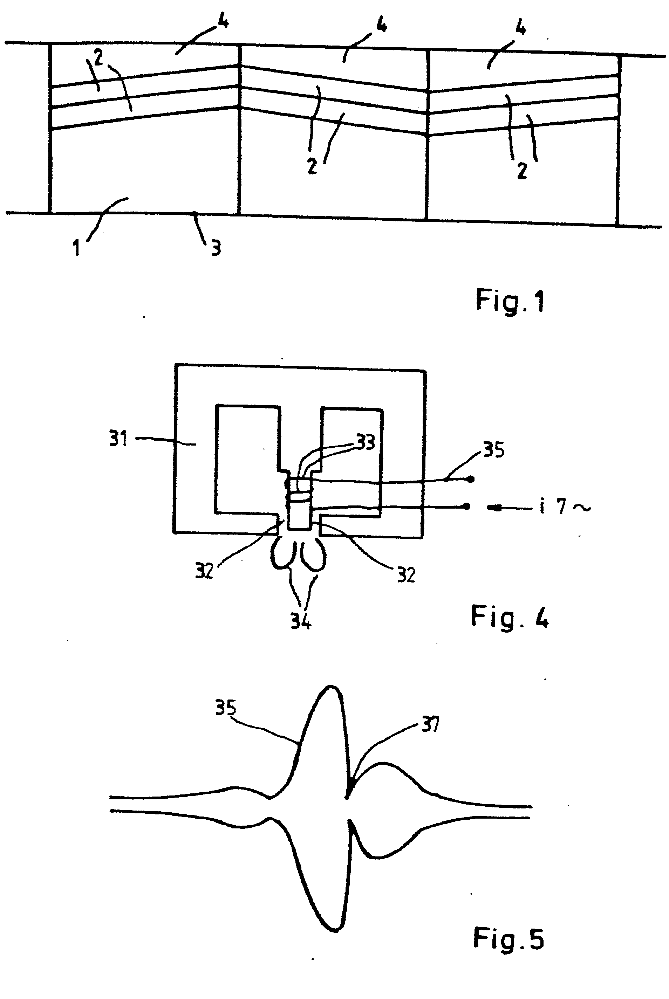

Fig. 1 zeigt ein Magnetband 1 mit Spuren 2, die in etwa parallel zur Bandkante 3 verlaufen. Die Spuren 2 sind in Blöcken 4 angeordnet. Diese Figur ist aus der DE-PE-35 09 584 bekannt.

Fig. 2 zeigt eine in eine Richtung 7 rotierende Kopfradscheibe 5 in ihrer stationären Umgebung 6. Auf der Kopfradscheibe 5 sind vier Magnetköpfe 9 angeordnet. Der Geber 8 wird von einem Wechselstrom i1, der mit einer hohen Frequenz seine Polarität wechselt, durchflossen. Wenn die Magnetköpfe 9 am Geber 8 vorbeigleiten, wird in den Magnetköpfen 9 eine Wechselspannung induziert. Durch den Zeitpunkt der Induktion ist die Stellung der vier Magnetköpfe 9 zum Geber 8 und damit auch die Stellung der Magnetköpfe 9 zum Band 1 festgelegt. Eine Höhenverschiebung der rotierenden Kopfscheibe 5 in eine der Achsrichtungen 10 oder 11 wird durch die Anordnung des Gebers 8 auf der stationären Umgebung 6 erkannt. Die Magnetköpfe 9 fungieren als Sensoren, vom Geber 8 sind nur die Zuführungsleitungen 8 zu sehen.

Mögliche vorteilhafte Anordnungen des Gebers 8 auf der stationären Umgebung 6 zeigt die Fig. 3. Fig. 3A zeigt eine V-förmige Anordnung des Gebers 8 mit den Schenkeln 12 und 13. Zunächst wird die Rotationsgeschwindigkeit gemessen. Dazu läuft ein Magnetkopf 9 zweimal an einem der Schenkel 12 oder 13 vorbei, oder zwei Magnetköpfe 9 laufen einmal an einem der Schenkel 12 oder 13 vorbei. Aus der Rotationsgeschwindigkeit und dem Abstand zwischen beiden Schenkeln 12,13 kann zunächst die Höhe h und dann die Phasenlage zum Band 1 bestimmt werden. Aufgrund der Höhe h läßt sich eine eindeutige Zuordnung zwischen einem Magnetkopf 9 und einer Spur 2 treffen. Eine einfachere Version zur Höhenbestimmung zeigt die Fig. 3B. Der Schenkel 14 bestimmt die Phasenlage der Magnetköpfe 9 zum Band 1. Aus dem sich vergrößernden Abstand A zwischen den beiden Schenkeln 14 und 15 und aus der Rotationsgeschwindigkeit der Kopfscheibe 5 läßt sich eine Höhe h feststellen. Aufgrund der Höhe h zwischen Kopfscheibe 5 und der stationären Umgebung 6 läßt sich somit eine Längsspur 2 auf einem Magnetband 1 genau orten. In der Fig. 3C sind die Schenkel 16 - 19 übereinander angeordnet und stehen etwa senkrecht zur bzw. auf der Bandtransportrichtung. Anhand der Schenkel 16 - 19 läßt sich die Phasenlage der Köpfe 9 zum Band 1 bestimmen. Die Schenkel 16 - 19 werden von Strömen i2 - i5 durchflossen. Jeder Strom wechselt seine Polarität mit einer ihn charakterisierenden Frequenz. Anhand dieser Frequenz ist eine Höhe h zwischen Kopfscheibe 5 und stationärer Umgebung 6 und damit eine Höhenverschiebung zwischen Magnetband 1 und Magnetkopf 9 bestimmt. Dabei können allerdings Feldüberlagerungen auftreten. Eine Anordnung, die Feldüberlagerungen vermeidet, zeigt Fig. 3D. Die Schenkel 20 - 22 werden auch von Strömen, die ihre Polarität mit verschiedenen Frequenzen wechseln, durchflossen. Die Rotationsgeschwindigkeit läßt sich aus der Zeit berechnen, die vergeht, bis zwei Köpfe 9 an einem der Schenkel 20 - 22 vorbeigleiten und einen Impuls in beiden Magnetköpfen 9 induzieren. Die Höhe h wird anhand der Frequenz der Ströme festgelegt. In der Fig. 3E reicht ein Magnetkopf 9 aus, um eine Rotationsgeschwindigkeit aus dem Abstand zwischen zwei Schenkeln 23 und 24, 25 und 26, 27 und 28 oder 29 und 30 zu bestimmen, verschiedene Frequenzen der Ströme in den Schenkeln 23 - 30 charakterisieren die Höhe h. In der Praxis wird mit einem Band gearbeitet, das eine Höhe 2h von 8 mm (2h = 8 mm) aufweist. Auf diesem Band können bei einer Spurbreite von etwa 10 µm 400 Spuren pro Spurhälfte, das bedeutet bei einer Wendecassette insgesamt 800 Spuren, aufgezeichnet werden.

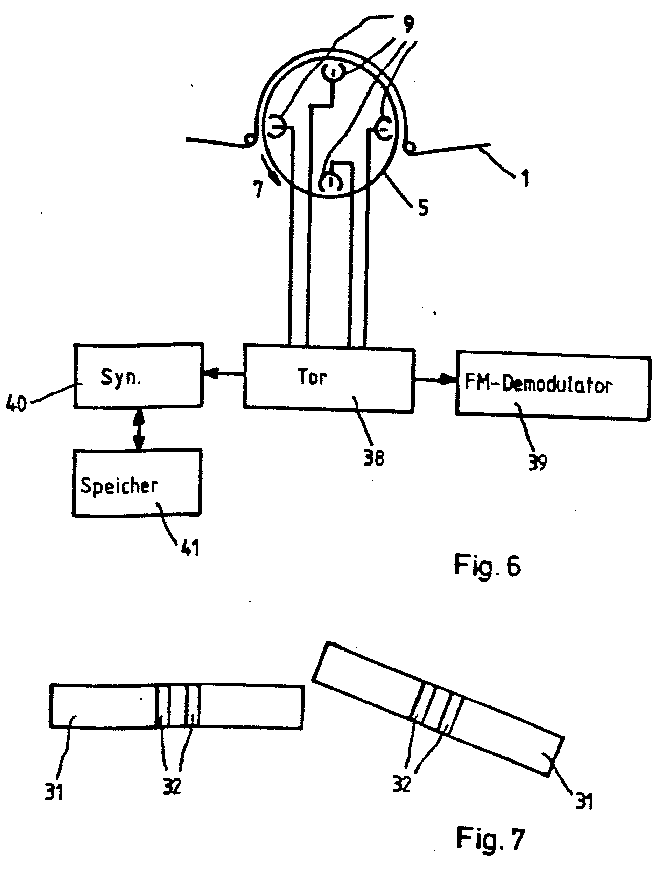

Fig. 4 zeigt einen Löschkopf 31 mit Doppelspalt 32. Der Strom i6 wechselt seine Polarität mit einer hohen Frequenz, etwa 6 MHz. Der Löschkopf 31 baut vor dem Doppelspalt, wenn der Strom i6 fließt, zwei Magnetfelder 34 auf.

Die Magnetfelder 34 induzieren in einem vorbeigleitenden Magnetkopf 9 eine Spannung, deren Hüllkurve 35 in Fig 5. gezeigt ist. Der Einschnitt 36 ist markant und dient zur Anzeige einer Phase zwischen Stationärer Umgebung 6 und der Kopfradscheibe 5 und damit zur Anzeige der Phase zwischen einer Spur 2 eines Magnetbandes 1 und den Magnetköpfen 9.

Fig. 6 zeigt eine Kopfradscheibe 5 mit vier Magnetköpfen 9, die in die Richtung 7 rotiert. An dieser Kopfradscheibe 5 wird eine Magnetband 1 vorbeigeführt. Vorteilhaft erfüllen die Magnetköpfe 9 mehrere Aufgaben. Sie arbeiten als Aufzeichnungs- und/oder als Wiedergabeköpfe und zusätzlich als Sensoren zur Phasen-und/oder Höhenerkennung. Signale von den Köpfen 9 werden über einen oder mehrere (nicht dargestellte) Übertrager auf eine Torschaltung 38 gegeben. Die Torschaltung 38 trennt ankommende Signale aufgrund einer Frequenz und/oder einer Amplitude nach aufgezeichneten Signalen und Synchronsignalen. Die aufgezeichneten Signale werden einem FM-Demodulator zugeführt. Die Synchronsignale gelangen zu einer Synchronsteuerung 40. Die Synchronsteuerung 40 regelt den Bandtransport, die Rotationsgeschwindigkeit der Kopfradscheibe 5 und die Höhe h der Kopfradscheibe 5. Dabei wird die Spurzuordnung von Band 1 und Magnetköpfen 9 in einem Speicher 41 abgespeichert. Der Speicher beinhaltet Speicherraum für Augenblickswerte, das heißt, den aktuellen Stand zwischen einer Spur 2 und einem Magnetkopf 9, und für Relativwerte, das heißt, Eigenheiten eines Bandes 1, die jedes Band 1 charakterisieren, z.B. Abstand einer Spur 2 zur Bandkante 3, die Spurlänge eines Blockes und den Winkel zwischen einer Spur 2 und der Bandkante 3.

Eine Anordnung, wie in den Figuren 3A und 3B beschrieben, läßt sich auch mit Hilfe zweier Löschköpfe 31 mit Doppelspalt 32 erzielen. In der Fig. 3B kann der Schenkel 14 durch einen Löschkopf 31 und der Schenkel 15 durch einen zweiten Löschkopf 31 ersetzt werden. Fig. 7 zeigt zwei Löschköpfe 31 mit zwei Doppelspalten 32 in einer V-förmigen Anordnung. Die Löschköpfe 31 sind in einer stationären Umgebung 6, das kann das Chassis eines Videorekorders sein, so angeordnet, daß die Magnetköpfe 9 an den Doppelspalten 32 vorbeistreichen. Weisen die Löschköpfe 31 Magnetfelder 39 auf, so wird in den Magnetköpfen 9 eine Spannung induziert, die eine Phasen- und Höhenlage der Magnetköpfe 9 festlegt.

Eine Anordnung, die die Geber auf der Kopfradscheibe und einen oder mehrere Sensoren auf der Stationären Umgebung 6 anordnet, ist auch möglich. Vorteilhaft entfällt dann die Torschaltung 38.

## Patentansprüche

1. Gerät, insbesondere Videorecorder, zur Aufzeichnung und/oder Wiedergabe von Signalen auf oder von einem bandförmigen Aufzeichnungsträger (1), insbesondere für ein Digitalsignal auf einem Magnetband (1), mit einem oder mehreren Sensoren (9), insbesondere Köpfen (9), und mehreren Gebern (8, 12-31), die jeweils auf einer rotierenden Kopfradscheibe (5), die in Axialrichtung (10,11) verschiebbar ist, bzw. in einer stationären Umgebung (6) angeordnet sind dadurch gekennzeichnet, daß mindestens zwei Geber (8, 12-31) über eine Höhe (h) in der Axialrichtung (10, 11) der Kopfradscheibe (5) unterschiedlich wirksam sind.

2. Gerät nach Anspruch 1, dadurch gekennzeichnet, daß der oder die Geber (8, 12-31) Leiter (8) aufweisen.

3. Gerät nach Anspruch 1 oder 2, dadurch gekennzeichnet, daß der oder die Geber (8, 12-31) Schenkel (16-30) aufweisen.

4. Gerät nach Anspruch 3, dadurch gekennzeichnet, daß die Schenkel (12-15) eine V-förmige Anordnung aufweisen.

5. Gerät nach Anspruch 4, dadurch gekennzeichnet, daß ein Schenkel (14) der V-förmigen Anordnung senkrecht zur Bandtransportrichtung steht.

6. Gerät nach Anspruch 1, dadurch gekennzeichnet, daß die Geber (8, 12-30) von Strömen (i1-i6) durchflossen sind.

7. Gerät nach Anspruch 3 und 6, dadurch gekennzeichnet, daß die Schenkel (16-30) von verschiedenen Strömen (i2-i6) durchflossen sind.

8. Gerät nach Anspruch 7, dadurch gekennzeichnet, daß jeder Schenkel (16-30) eine Höhe (h) zwischen Magnetkopf (9) und Magnetband (1) charakterisiert.

9. Gerät nach Anspruch 7 und/oder 8, dadurch gekennzeichnet, daß jeder Strom (i2-i6) eine Höhe (h) zwischen Magnetkopf (9) und Magnetband (1) charakterisiert.

10. Gerät nach Anspruch 1, dadurch gekennzeichnet, daß zwei Köpfe (31) als Geber (8, 12-31) vorgesehen sind.

11. Geber nach Anspruch 10, dadurch gekennzeichnet, daß die Köpfe (31) einen Doppelspalt (32) aufweisen.

12. Gerät nach Anspruch 11, dadurch gekennzeichnet, daß die Köpfe (31) Löschköpfe (31) sind.

13. Gerät nach einem der Ansprüche 10-12, dadurch gekennzeichnet, daß die Spulen (33) der Köpfe (31) von einem oder mehreren Strömen (i7) durchflossen wird.

14. Gerät nach Anspruch 9 und/oder 13, dadurch gekennzeichnet, daß der oder die Ströme (i1–i7) ihre Polarität mit hoher Frequenz wechseln.

15. Gerät nach Anspruch 14, dadurch gekennzeichnet, daß eine Frequenz 6 MHz beträgt.

16. Gerät nach einem der Ansprüche 10–15, dadurch gekennzeichnet, daß die Löschköpfe V-förmig angeordnet sind (Fig. 7).

## Claims

1. Apparatus, in particular video recorder, for the recording and/or playback of signals on or from a record support (1) in tape form, in particular for a digital signal on a magnetic tape (1), with one or more sensors (9), in particular heads (9), and several signal originators (8, 12-31), which are arranged in each case on a rotating head wheel disc (5), which is displaceable in an axial direction (10, 11), or in a stationary environment (6), characterised in that at least two transmitters (8, 12-31) are variably operative over a height (h) in the axial direction (10, 11) of the head wheel disc (5).

2. Apparatus according to claim 1, characterised in that the signal originator(s) (8, 12-31) comprise conductors (8).

3. Apparatus according to claim 1 or 2, characterised in that the signal originator(s) (8, 12-31) comprise flanks (16-30).

4. Apparatus according to claim 3, characterised in that the flanks (12-15) have a V-shaped lay-out.

5. Apparatus according to claim 4, characterised in that one flank (14) of the V-shaped lay-out is positioned perpendicular to the tape conveyance direction.

6. Apparatus according to claim 1, characterised in that currents (i1-i6) flow through the signal originator(s) (8, 12-30).

7. Apparatus according to claim 3 and 6, characterised in that different currents (i2-i6) flow through the flanks (16-30).

8. Apparatus according to claim 7, characterised in that each flank (16-30) characterises a height (h) between magnetic head (9) and magnetic tape (1).

9. Apparatus according to claim 7 and/or 8, characterised in that each current (i2-i6) characterises a height (h) between magnetic head (9) and magnetic tape (1).

10. Apparatus according to claim 1, characterised in that two heads (31) are provided as signal originator(s) (8, 12-31).

11. Apparatus according to claim 10, characterised in that the heads (31) comprise a double gap (32).

12. Apparatus according to claim 11, characterised in that the heads (31) are erase heads (31).

13. Apparatus according to any one of claims 10–12, characterised in that one or more currents (i7) flow through the coils (33) of the heads (31).

14. Apparatus according to claim 9 and/or 13, characterised in that the current or currents (i1-i7) change their polarity at high frequency.

15. Apparatus according to claim 14, characterised in that one frequency is 6 MHz.

16. Apparatus according to any one of claims 10–15, characterised in that the erase heads have a V-shaped lay-out (Fig.7).

## Revendications

1. Appareil, notamment un enregistreur vidéo pour enregistrer et/ou reproduire des signaux sur ou à partir d'un support d'enregistrement (1) en forme de bande, notamment pour un signal numérique sur une bande magnétique (1), comportant un ou plusieurs capteurs (9), notamment des têtes (9) et plusieurs capteurs (8, 12–31) qui sont disposés sur un tambour porte-têtes rotatif (5) qui est déplaçable dans le sens axial (10, 11) ou disposé dans une partie fixe (6), caractérisé en ce que deux capteurs (8, 12–31) au moins agissent différemment sur une hauteur (h) dans le sens axial (10, 11) du tambour porte-têtes (5).

2. Appareil selon la revendication 1, caractérisé en ce que le ou les capteur(s) (8, 12–31) comportent des conducteurs (8').

3. Appareil selon la revendication 1 ou 2, caractérisé en ce que le ou les capteur(s) (8, 12–31) comportent des branches (16–30).

4. Appareil selon la revendication 3, caractérisé en ce que les branches (12–15) sont disposées en forme de V.

5. Appareil selon la revendication 4, caractérisé en ce qu'une branche (14) de la disposition en forme de V est perpendiculaire au sens de déplacement de la bande.

6. Appareil selon la revendication 1, caractérisé en ce que les capteurs (8, 12–30) sont traversés par des courants (i1–i6).

7. Appareil selon les revendications 3 et 6, caractérisé en ce que les branches (16–30) sont traversées par différents courants (i2–i6).

8. Appareil selon la revendication 7, caractérisé en ce que chaque branche (16–30) caractérise une hauteur (h) entre la tête magnétique (9) et la bande magnétique (1).

9. Appareil selon les revendications 7 et/ou 8, caractérisé en ce que chaque courant (i2–i6) caractérise une hauteur (h) entre la tête magnétique (9) et la bande magnétique (1).

10. Appareil selon la revendication 1, caractérisé en ce que deux têtes (31) sont prévues comme capteur (8, 12–31).

11. Appareil selon la revendication 10, caractérisé en ce que les têtes (31) ont un double entrefer (32).

12. Appareil selon la revendication 11, caractérisé en ce que les têtes (31) sont des têtes d'effacement.

13. Appareil selon l'une des revendications 10 à 12, caractérisé en ce que les enroulements (33) des têtes (31) sont traversés par un ou plusieurs courants (17).

14. Appareil selon les revendications 9 et/ou 13, caractérisé en ce que le ou les courant(s) (i1–i7) change(nt) de polarité avec une haute fréquence.

15. Appareil selon la revendication 14, caractérisé en ce qu'une fréquence est de 6 MHz.

16. Appareil selon l'une des revendications 10 à 15, caractérisé en ce que les têtes d'effacement sont disposées en forme de V (figure 7).

Fig.1

Fig. 4

Fig.5

Fig. 2

Fig. 3A

Fig. 3 B

Fig. 3C

Fig. 3D

Fig. 3E

Fig. 6

Fig. 7